# EUROPEAN PATENT APPLICATION

(11) **EP 4 098 119 A1**
(43) Date of publication of application: **07.12.2022**
(21) Application number: 22174336.2
(22) Date of filing: 19.05.2022
(51) Int. Cl.: A01M 7/00, A01B 69/00

(54) **WORK MACHINE**

(30) Priority: 31.05.2021 JP 2021091531
(71) Applicant: Yanmar Holdings Co., Ltd., Osaka-shi, Osaka (JP)
(72) Inventor: UKAI, Hirofumi, Osaka (JP); IBE, Toshihiko, Osaka (JP)
(74) Representative: Novagraaf International SA

(57) **Abstract**

[Problem] A work machine that can easily suppress occurrence of unevenness in a work amount by a work unit is provided.

[Solution] The work machine (spraying machine 1) includes a machine body 10, a work unit (spraying unit 41), a support frame 3, and an antenna 21. The work unit (spraying unit 41) performs the work. The support frame 3 is supported by the machine body 10 rotatably around a rotation axis Ax1 along a front-back direction D3. The support frame 3 supports the work unit (spraying unit 41). The antenna 21 is disposed above the rotation axis Ax1.

## Description

### TECHNICAL FIELD

The present invention relates to a work machine including a work unit that performs works.

### BACKGROUND ART

As a related art, a work machine (agricultural vehicle) including a crawler travel unit, a left vehicle body, a right vehicle body, an engine, and a work unit (chemical injection unit) is known (see, for example, Patent Document 1). In the work machine according to the related art, the crawler travel units are disposed in a left-right pair and travels so that a plant, which is a target for spraying, is sandwiched therebetween in the left-right direction. The left vehicle body is supported mainly by the crawler travel unit on a left side. The right vehicle body is supported mainly by the crawler traveling unit on a right side. The engine is disposed on the left vehicle body side.

In the work machine according to the related art, the work unit is provided on the left and right vehicle bodies, respectively. Each work unit sprays chemicals on both the right and left sides. As a result, the work machine according to the related art can spray chemicals on plants passing between the left-right pair of crawler travel units, plants located on the left side of the work machine, and plants located on the right side of the work machine at the same time.

### PRIOR ART DOCUMENT

### PATENT DOCUMENT

Patent Document 1: Japanese Patent Application Publication No. 2020-152285

### SUMMARY OF INVENTION

### TECHNICAL PROBLEM

In a configuration of the above related art, the left and right vehicle bodies might tilt to the left or right when the ground is inclined, for example. In this case, plants that extend vertically straight from the ground may have different distances from the work unit between a top and a bottom of the plant, resulting in unevenness in a work amount (the amount of chemical sprayed, for example) by the work unit.

An object of the present invention is to provide a work machine that can easily suppress unevenness in the work amount by the work unit.

### SOLUTION TO PROBLEM

A work machine according to one aspect of the present invention includes a machine body, a work unit, a support frame, and an antenna. The work unit performs the work. The support frame is supported by the machine body rotatably around a rotation axis along the front-back direction and supports the work unit. The antenna is disposed above the rotation axis.

### ADVANTAGEOUS EFFECTS OF INVENTION

According to the present invention, a work machine that can easily suppress unevenness in the work amount by the work unit can be provided.

### BRIEF DESCRIPTION OF DRAWINGS

FIG. 1 is an appearance view of a spraying machine according to Embodiment 1, viewed from a front left side.
FIG. 2 is an appearance view of a rear surface of the spraying machine according to Embodiment 1, viewed from a rear side.
FIG. 3 is a diagram illustrating an example of a crop row where the spraying machine of Embodiment 1 is used.
FIG. 4 is a schematic diagram illustrating an overall configuration of an automatic traveling system using the spraying machine according to Embodiment 1.
FIG. 5 is an appearance view of a left side surface of the spraying machine according to Embodiment 1, viewed from a left side.
FIG. 6 is an appearance view of a right side surface of the spraying machine according to Embodiment 1, viewed from a right side.
FIG. 7 is an appearance view of an upper surface of the spraying machine according to Embodiment 1, viewed from above.
FIG. 8 is an appearance view of the rear surface of the spraying machine according to Embodiment 1, viewed from the rear side.
FIG. 9 is a schematic diagram illustrating the spraying machine according to Embodiment 1 viewed from diagonally rear.
FIG. 10 is a cross-sectional view of a rear part from a vertical frame of the spraying machine according to Embodiment 1.
FIG. 11 is an appearance view of the rear surface of the spraying machine according to Embodiment 1, viewed from the rear side in a state of traveling on a horizontally inclined slope.
FIG. 12 is an appearance view of the right side surface of the spraying machine according to Embodiment 2, viewed from the right side.
FIG. 13 is a schematic diagram of an essential part of the spraying machine according to Embodiment 3, viewed from diagonally rear.

### DESCRIPTION OF EMBODIMENTS

Embodiments of the present invention will be described below with reference to the accompanying drawings. The embodiments described below are examples of embodiments of the present invention and are not intended to limit the technical scope of the present invention.

### Embodiment 1

### [1] Overall Configuration

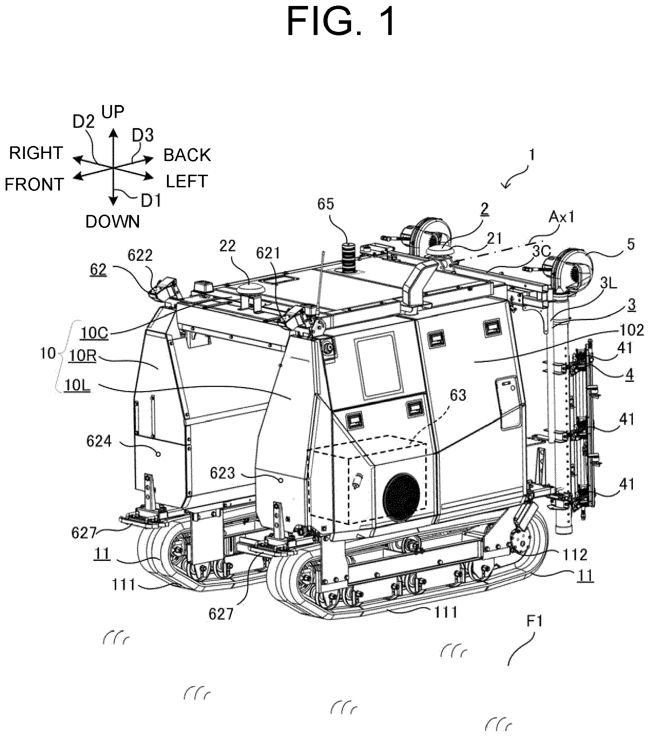

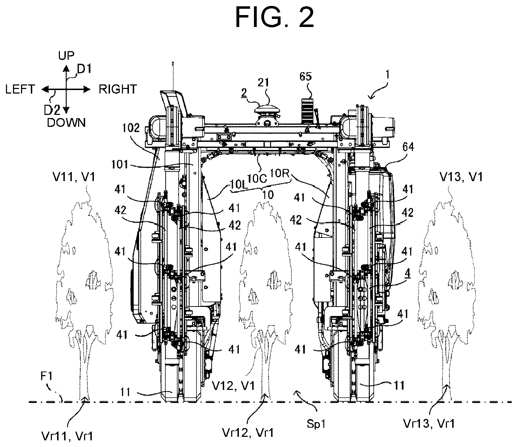

First, the overall configuration of the spraying machine 1 according to this embodiment will be explained with reference to FIGS. 1 to 4. In this embodiment, the spraying machine 1 performs a spraying work of spraying a sprayed material such as chemicals, water, fertilizers and the like, for example, to a crop V1 (see FIG. 2) grown in a field F1. This spraying machine 1 is an example of a "work machine" that performs various works in a work target area such as the field F1.

In other words, the spraying machine 1 is a work machine that can perform a spraying work of spraying the sprayed material such as chemicals, water, fertilizers and the like, for example, as a work. The "work machine" referred to in this disclosure includes, for example, work vehicles such as tractors, rice planters, sprayers, seeders, transplanters, combine harvesters and the like, in addition to the spraying machine. That is, the work machines include the work vehicles. The work machine is not limited to a "vehicle" but may be, for example, a flying work vehicle such as a drone, a multicopter or the like for spraying chemicals, water, fertilizers or the like. Furthermore, the "work machine" referred to in this disclosure is not limited to agricultural machines (farm machinery), but can also be, for example, construction machines (construction equipment) and the like.

The "field" referred to in this disclosure is an example of a work target area where the spraying machine 1, which is a work machine, performs various works such as spraying, for example, while moving and includes orchards, pastures, rice fields, and fields where agricultural products are grown. In this case, the crop V1 grown in the field F1 is an agricultural product. Moreover, if garden plants are grown in a planting field, the planting field becomes the field F1, and if trees to be used as timber are grown in a forest, as in forestry, the forest becomes the field F1. In this case, the crop V1 grown in the field F1 is a garden plant, a tree and the like. However, the work target area where the work machine performs works is not limited to the field F1, but may be any area other than the field F1. For example, if the work machine is a construction machine, the work target area is a site where the construction machine is working.

In this embodiment, as an example, the spraying machine 1 is assumed to be a vehicle that moves around the field F1, which is an orchard such as a vineyard or an apple orchard, and sprays a chemical solution to the crop V1 grown in the field F1. In this case, the chemical solution is an example of the sprayed material. The crop V1 is an example of a target for spraying with the sprayed material (chemical solution) such as a grape tree, for example. The crop V1, which is the target for spraying, is also an example of a work target to be worked by the spraying machine 1 as a work machine. The "chemical solution" referred to here as the sprayed material is agricultural chemicals used for higher efficiency of agriculture or preservation of crops, and include herbicides, fungicides, mold inhibitors, insecticides, herbicides, rodenticides, growth promoters and germination inhibitors for the crop V1.

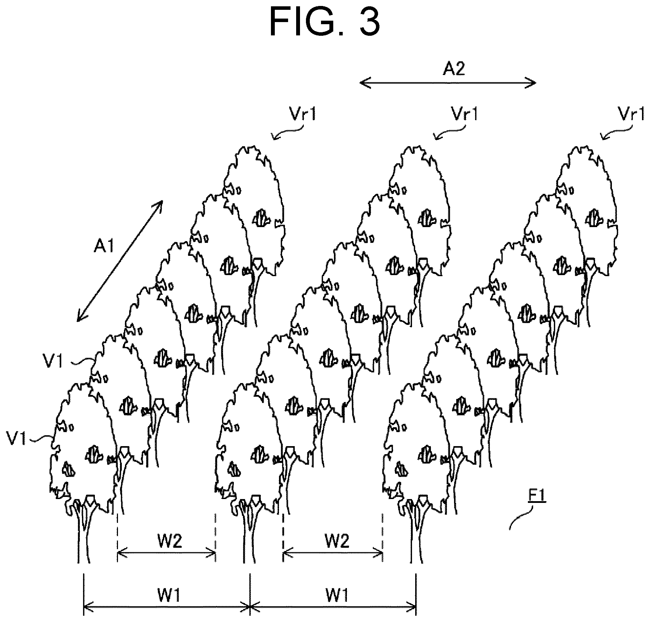

The crops V1 are disposed in multiple rows at predetermined intervals in the field F1. Specifically, as shown in FIG. 3, a plurality of crops V1 are planted in straight lines in a vertical direction A1 on a plan view. The plurality of crops V1 aligned in a straight line in the vertical direction A1 constitute a crop row Vr1. FIG. 3 shows three crop rows Vr1, each containing six crops V1 aligned in the vertical direction A1 as an example. Each of the crop rows Vr1 is disposed at a predetermined interval W1 in a width direction A2. As a result, a work path having a width W2 (<W1) corresponding to the interval between the crop rows Vr1 and extending along the vertical direction A1 is formed between the adjacent crop rows Vr1. The spraying machine 1 moves (travels) in the vertical direction A1 through this work path while spraying the sprayed material (chemical solution) to the crop V1.

As will be described in detail below, the spraying machine 1 traveling in the field F1 includes a gate-shaped machine body 10. In other words, the machine body 10 has a first block 10L and a second block 10R disposed side by side in a left-right direction D2, and a connecting portion 10C which connects upper end portions of the first block 10L and the second block 10R to each other. As a result, the machine body 10 constitutes a gate shape surrounding three sides, that is, left, right, and upper sides of a space Sp1 by the first block 10L, the second block 10R and the connecting portion 10C. In other words, the space Sp1 open to a front-back direction D3 is formed inside the machine body 10.

As shown in FIG. 2, the spraying machine 1 can spray the sprayed material (chemical solution) to the crop V1 in the crop row Vr1 and the crop V1 in the crop row Vr1 adjacent to this crop row Vr1, while traveling with the machine body 10 formed having the gate shape in an attitude straddling the one crop row Vr1. In other words, the spraying machine 1 can travel so as to pass the crop V1 which is the target for spraying (work target) through the space Sp1 inside the machine body 10 formed having the gate shape. In other words, as shown in FIG. 2, when there are three crop rows Vr11, Vr12, and Vr13 aligned in the left-right direction D2, the spraying machine 1 can travel with the machine body 10 straddling the arbitrary work row Vr1 in these three crop rows Vr11, Vr12, and Vr13.

Here, if the machine body 10 straddles the center crop row Vr12, the first block 10L travels on the work path between the left-end crop row Vr11 and the crop row Vr12, and the second block 10R travels on the work path between the right-end crop row Vr13 and the crop row Vr12. Then, the spraying machine 1 can spray the sprayed material (chemical solution) to the crop V11 in the crop row Vr11, the crop V12 in the crop row Vr12, and the crop V13 in the crop row Vr13 at the same time. As described above, the spraying machine 1 according to this embodiment can spray the sprayed material (chemical solution) to the target for spraying (crop V1) in three rows at the same time during traveling and thus, the spraying work is more efficient as compared with a configuration of spraying row by row.

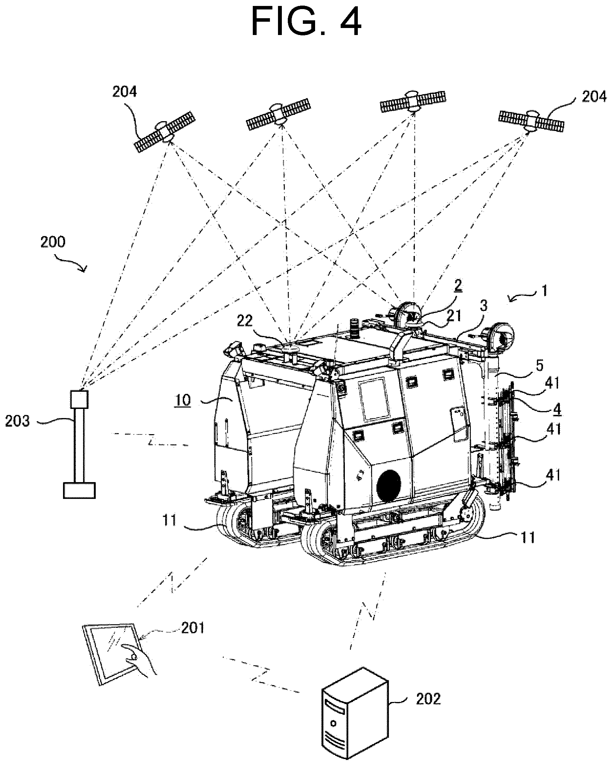

Furthermore, in this embodiment, as an example, the spraying machine 1 is an unmanned machine that operates by automatic operation, not by a human (operator) operation (including remote control). Therefore, as shown in FIG. 4, the spraying machine 1 constitutes an automatic traveling system 200 with an operation terminal 201, a server 202, a base station 203, a satellite 204 and the like. In other words, the automatic traveling system 200 includes the spraying machine 1, the operation terminal 201, the server 202, the base station 203, and the satellite 204. However, at least one of the operation terminal 201, the server 202, the base station 203, and the satellite 204 does not have to be included in the constituent elements of the automatic traveling system 200, and the automatic traveling system 200 does not have to include the satellite 204, for example.

The spraying machine 1, the operation terminal 201, and the server 202 are communicate-capable with one another. The term "communication-capable" referred to in this disclosure means that information can be transmitted/received directly or indirectly through a communication network (network) or a relay or the like by wired or wireless (radio wave or optical medium) communication methods, as appropriate. For example, the spraying machine 1 and the operation terminal 201 are communication-capable via the Internet, LAN (Local Area Network), WAN (Wide Area Network), a public telephone network, a mobile telephone network, a packet network, a wireless LAN or the like. Each of the spraying machine 1 and the operation terminal 201 is also communication-capable with the server 202 via the Internet or the like.

The satellite 204 is a positioning satellite constituting a satellite positioning system such as GNSS (Global Navigation Satellite System) or the like and transmits GNSS signals (satellite signals). The base station 203 is a reference point (reference station) that constitutes the satellite positioning system. The base station 203 transmits correction information to the spraying machine 1 to calculate a current position and the like of the spraying machine 1.

The spraying machine 1 according to this embodiment includes a positioning device 2 that detects the current position (latitude, longitude, altitude and the like) and the current azimuth and the like of the machine body 10. The positioning device 2 uses the GNSS signals transmitted from the satellite 204 to execute positioning processing to identify (calculate) the current position, azimuth and the like of the machine body 10. The positioning device 2 employs, for example, a positioning system with relatively high accuracy such as RTK (Real Time Kinematic) positioning or the like which executes positioning on the basis of positioning information (GNSS signals and the like) received by two units of receivers (the base station 203 and the antenna 21) and the correction information generated in the base station 203.

The operation terminal 201 is an information processing device such as a tablet terminal, a smartphone and the like. The operation terminal 201 includes a display unit such as a liquid crystal display or an organic EL display, which displays various types of information, and an operation unit such as a touch panel, a mouse or a keyboard, which accepts the operation. The operator can perform an operation to register the various types of information on an operation screen displayed on the display unit by operating the operation unit. Moreover, the operator can give a work start instruction, a travel stop instruction and the like to the spraying machine 1 by operating the operation unit.

The server 202 is an information processing device such as a server device. The server 202 transmits information such as a target path or the like for the automatic travel of the spraying machine 1 to the spraying machine 1.

Moreover, the spraying machine 1 can travel automatically (autonomously) along the target path set in advance. For example, the spraying machine 1 automatically travels along the target path that includes a plurality of work paths and travel paths from a work start position to a work end position. The plurality of work paths are linear paths along which the spraying machine 1 performs the work (spraying work) on the crop V1, which is the work target (spraying target), respectively, and the travel paths are paths along which the spraying machine 1 travels between the crop rows Vr1 without performing the spraying work and can include a turning path and a linear path.

Furthermore, the spraying machine 1 automatically travels in a predetermined row order. In the example in FIG. 2, the spraying machine 1 travels by straddling the crop row Vr11, then the crop row Vr12, and then the crop row Vr13. In this way, the spraying machine 1 performs automatic traveling in accordance with a preset order of the crop row Vr1. The spraying machine 1 may travel one row at a time in the order in which the crop rows Vr1 are arranged, or may travel every plural rows.

Moreover, for convenience of explanation, the vertical direction in a state where the spraying machine 1 is usable is defined as an up-down direction D1 as shown in FIG. 1. Furthermore, the left-right direction D2 and the front-back direction D3 are defined with respect to the direction viewed from a center point of the spraying machine 1 on a plan view. In other words, the direction of travel of the spraying machine 1 when the spraying machine 1 is moving forward is a front in the front-back direction D3, and the direction of travel of the spraying machine 1 when the spraying machine 1 is moving backward is a rear in the front-back direction D3. However, these directions are not intended to limit a use direction (direction in use) of the spraying machine 1.

Moreover, the term "parallel" referred to in this disclosure means, in addition to the case where two straight lines on one plane do not intersect no matter how far they are extended, that is, the angle between them is strictly 0 degrees (or 180 degrees), a case where the angle between them has a relationship within an error range of approximately several degrees (less than 10 degrees, for example) with respect to 0 degrees. Similarly, the term "orthogonal" referred to in this disclosure means that, in addition to the case where the angle of intersection between the two is exactly 90 degrees, the angles between the two has a relationship within an error range of approximately several degrees (less than 10 degrees, for example) with respect to 90 degrees.

### [2] Details of Spraying Machine

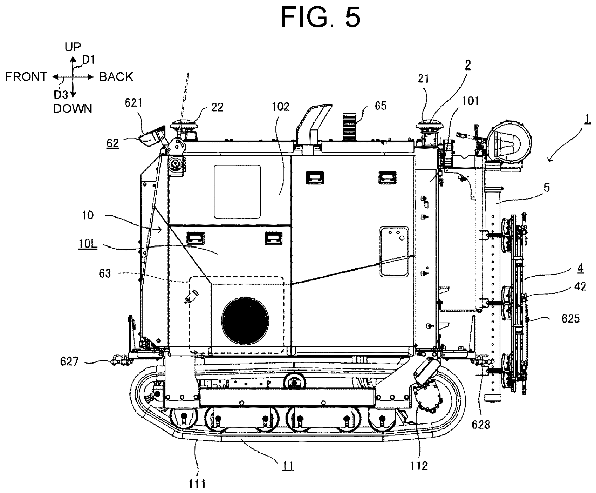

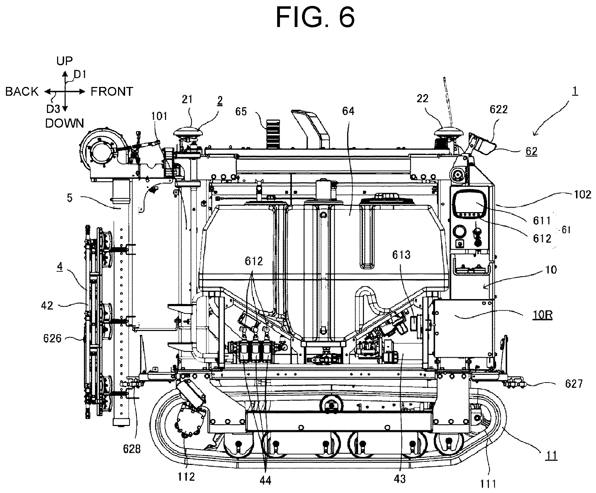

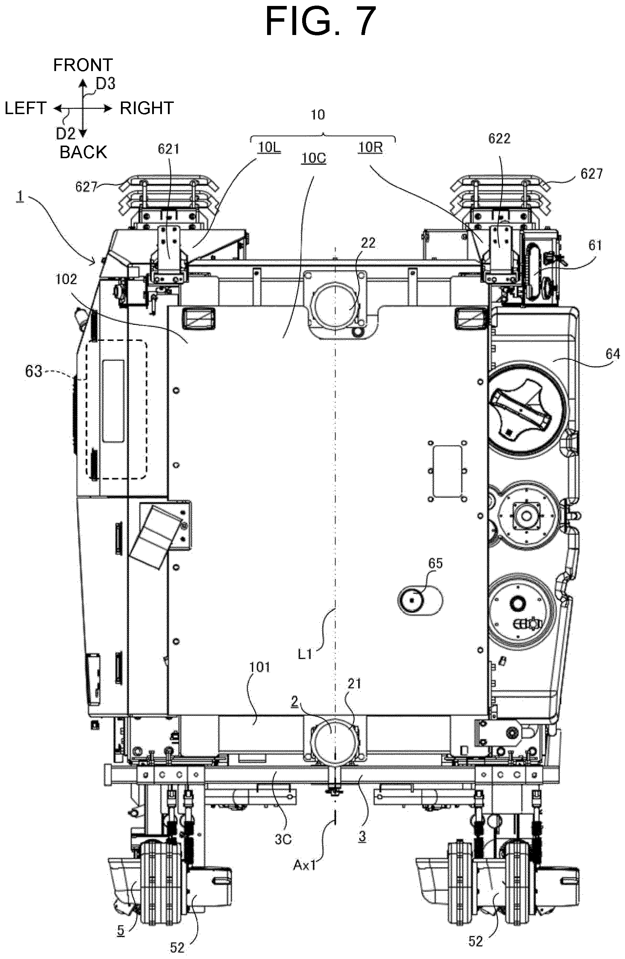

Next, the configuration of the spraying machine 1 will be explained in more detail with reference to FIGS. 1, 2, 5, 6, and 7. FIG. 1 is an appearance view of the spraying machine 1 when viewed from the front left side, and FIG. 2 is an appearance view of the rear surface of the spraying machine 1 when viewed from the rear surface (back) side. FIG. 5 is an appearance view of the left side surface of the spraying machine 1 when viewed from the left side, FIG. 6 is an appearance view of the right side surface of the spraying machine 1 when viewed from the right side, and FIG. 7 is an appearance view of an upper surface of the spraying machine 1 when viewed from above.

The spraying machine 1 includes the machine body 10, the positioning device 2, the support frame 3, and a spraying device 4. In this embodiment, the spraying machine 1 further includes an airflow generating unit 5, a user interface 61 (see FIG. 6), an obstacle detecting device 62, a power source 63, a tank 64, an indicator 65 and the like. Moreover, the spraying machine 1 further includes a control device, a communication terminal, a fuel tank, a battery and the like. In this embodiment, structures of the spraying machine 1 such as the machine body 10, the support frame 3 and the like are basically made of metal, and the material is selected in accordance with required strength, weather resistance and the like. However, the structure of the spraying machine 1 is not limited to metal, but resin, wood or the like, for example, may be used as appropriate.

The machine body 10 is the main body of the spraying machine 1 and supports most of the constituent elements of the spraying machine 1, such as the positioning device 2, and the support frame 3 and the like. The machine body 10 has a frame 101 (see FIG. 2) and a cover 102. The frame 101 is a member that constitutes the framework of the machine body 10 and supports heavy objects such as the power source 63, the tank 64 and the like, for example. The cover 102 is a member that constitutes an outline of the machine body 10 and is mounted on the frame 101 so as cover at least a part of the frame 101 and members mounted on the frame 101. On a part of the back surface (rear surface) and of the right side surface of the machine body 10, the frame 101 is not covered by the cover 102, and the frame 101 is exposed. The cover 102 is divided into a plurality of parts, and these plurality of parts are configured to be capable of being individually removed from the frame 101. Therefore, regarding the cover 102, only a part corresponding to some devices (members), such as the power source 63 and the like, for example, can be removed, and this allows the some devices (members) such as the power source 63 the like to be exposed.

The machine body 10 has the first block 10L and the second block 10R disposed side by side in the left-right direction D2 as described above. The first block 10L and the second block 10R are opposed to each other in the left-right direction D2 in a state with an interval of a certain value or more. In this embodiment, as an example, the first block 10L is located on the left side and the second block 10R is located on the right side. Therefore, the left side part of the machine body 10 is constituted by the first block 10L and the right side part of the machine body 10 is constituted by the second block 10R. In addition, the machine body 10 has a connecting portion 10C which connects the first block 10L and the second block 10R. On a front view (viewed from the front), the connecting portion 10C has a length along the left-right direction D2, and the first block 10L and the second block 10R have lengths along the up-down direction D1, respectively.

Here, the connecting portion 10C connects the upper end portions of the first block 10L and the second block 10R to each other, in other words, the first block 10L and the second block 10R protrude downward from both end portions (in the left-right direction D2) of the connecting portion 10C, respectively. As a result, the machine body 10 constitutes a gate-shape that is open downward in addition to both sides in the front-back direction D3 by the first block 10L, the second block 10R and the connecting portion 10C. And inside the machine body 10, the space Sp1 with three sides thereof surrounded by the first block 10L, the second block 10R, and the connecting portion 10C and open to the front-back direction D3 is formed.

In short, as shown in FIG. 2, the machine body 10 has the space Sp1, through which the crop V1 (work target) to be a target of the work (spraying work) by the spraying device 4 (work unit) is passed, formed between the first block 10L and the second block 10R. Specifically, dimensions of each part in the machine body 10 are set so as to form the space Sp1 with a height and a width equal to or larger than a standard size of the crop V1, which is the target for spraying. Therefore, in the case of the crop V1 with the standard size, the machine body 10 can allow passage of the crop V1 through the space Sp1 in a state straddling the crop V1 with an interval at the predetermined value or more so that the crop V1 does not contact the machine body 10. While the crop V1 is passing through the space Sp1, the first block 10L is located on the left of the crop V1, the second block 10R is located on the right of the crop V1, and the connecting portion 10C is located above the crop V1.

More precisely, in this embodiment, the machine body 10 is constituted substantially symmetrically in the left-right direction D2. The first block 10L and the second block 10R are formed having substantially the same size and the same rectangular shape on a side view. The first block 10L and the second block 10R have flat shapes in the left-right direction D2 such that a dimension in the left-right direction D2 is the smallest among the up-down direction D1, the left-right direction D2, and the front-back direction D3, respectively. In addition, the first block 10L and the second block 10R are formed such that the parts above the center parts in the up-down direction D1 are tapered, respectively, with the dimensions in the left-right direction D2 getting smaller as they get closer to upper ends. The connecting portion 10C is formed having a rectangular shape on a plan view such that the dimension in the front-back direction D3 is larger than that in the left-right direction D2. The connecting portion 10C has a flat shape in the up-down direction D1 such that the dimensions in the up-down direction D1 are the smallest among the up-down direction D1, the left-right direction D2, and the front-back direction D3.

As described above, the machine body 10 can be roughly divided into three parts (blocks), that is, the first block 10L, the second block 10R, and the connecting portion 10C. Then, each of the first block 10L, the second block 10R and the connecting portion 10C has the frame 101 and the cover 102. In other words, each of the first block 10L and the second block 10R has the frame 101 and the cover 102. Furthermore, most of the constituent elements of the spraying machine 1 such as the positioning device 2, the support frame 3 and the like are provided in a distributed manner in the first block 10L, the second block 10R, and the connecting portion 10C.

The machine body 10 also has a traveling unit 11. The traveling unit 11 is a traveling device (vehicle body) that causes the spraying machine 1 to travel and is provided in a lower part of the machine body 10. The machine body 10 travels (including turning) on the ground by the traveling unit 11, whereby the machine body 10 can move in the left-right direction D2 and the front-back direction D3 in the field F1. Since the traveling unit 11 as above is provided on the machine body 10, the spraying machine 1 can perform the work (spraying work) while moving in the field F1.

The traveling unit 11 is a crawler-type traveling device that includes a crawler 111. The traveling unit 11 also includes a motor 112 that drives the crawler 111. In other words, the traveling unit 11 can cause the spraying machine 1 to travel by driving the crawler 111 by the motor 112. In this embodiment, as an example, the motor 112 is a hydraulic motor (hydraulic actuator) and drives the crawler 111 when a hydraulic oil is supplied from a hydraulic pump. According to this configuration, the machine body 10 can travel relatively stably even when road surface conditions in the field F1 are rough.

Here, the traveling unit 11 is provided on a lower part of each of the first block 10L and the second block 10R. That is, the machine body 10 has the traveling unit 11 in each of the first block 10L and the second block 10R. In other words, the machine body 10 has a left-right pair of the traveling units 11 (crawlers 111). The traveling unit 11 on the first block 10L side and the traveling unit 11 on the second block 10R side are opposed to each other through the space Sp1 in the left-right direction D2. As described above, since the pair of traveling units 11 are disposed far apart in the left-right direction D2 by a portion of the space Sp1, the spraying machine 1 can travel with a relatively stable attitude on various road surface conditions of the field F1, including horizontally inclined slopes where either side of the left-right direction D2 is lower than the other.

The pair of traveling units 11 are driven by power from the power source 63 in a state where independent speed changes are possible by a hydrostatic continuously variable transmission. Thus, the machine body 10 is brought into a forward traveling state where the pair of traveling units 11 (crawlers 111) are driven to travel straight forward at a constant velocity in the forward-traveling direction and is brought into a backward traveling state where the pair of traveling units 11 are driven to travel straight backward at a constant velocity in a backward-traveling direction. Moreover, the machine body 10 is brought into a forward traveling/turning state where the pair of traveling units 11 are driven to travel forward while turning at a non-constant velocity in the forward direction and is brought into a backward traveling/turning state where the pair of traveling units 11 are driven to travel backward while turning at a non-constant velocity in the backward direction. Furthermore, the machine body 10 is brought into a pivot turn (pivotal brake turn) state where driving of either one of the pair of traveling units 11 is stopped while the other is driven and is brought into a spin turn state (ultra-pivotal turn) where the pair of traveling units 11 are driven at a constant velocity in the forward-traveling direction and the backward-traveling direction. Furthermore, the machine body 10 is brought to a traveling stopped state when the driving of the pair of traveling units 11 is stopped.

The power source 63 and the like are mounted on the first block 10L, and the tank 64 and the like are mounted on the second block 10R. As described above, by disposing the components of the spraying machine 1 on the first block 10L and the second block 10R of the machine body 10 in a distributed manner, the spraying machine 1 is balanced in the left-right direction D2 and has a center of gravity lowered. As a result, the spraying machine 1 can travel stably on slopes and the like in the field F1. The allocation of each component will be explained in detail in "[4] Disposition of Power Sources and the like".

The positioning device 2 is a device that detects the current position and the current azimuth and the like of the machine body 10, as described above. The positioning device 2 has at least an antenna 21. The antenna 21 receives GNSS signals and the like transmitted from the satellite 204. In other words, the antenna 21 includes an antenna for locating a position of the machine body 10. Here, the antenna 21 is disposed on an upper surface (top surface) of the machine body 10 so that the signals (GNSS signals) from the satellite 204 can be received easily. In other words, the antenna 21 is disposed at a position further higher than the highest position of the machine body 10. Moreover, the positioning device 2 includes an attitude detecting unit and the like that detect the attitude of the machine body 10.

In this embodiment, the positioning device 2 further has an antenna 22, which is a second antenna, separately from the antenna 21, which is a first antenna. The positioning device 2 receives the GNSS signals and the like by each of these two antennas 21, 22. Here, the antenna 22 (second antenna) is disposed so as to be aligned with the antenna 21 (first antenna) in the front-back direction D3. Moreover, the antenna 22 (second antenna) is located on a virtual straight line L1 extended from a rotation axis Ax1 (see FIG. 1), which will be described later (see FIG. 7). In short, the two antennas 21, 22 in the positioning device 2 are both disposed on the upper surface (top surface) of the machine body 10 and disposed so as to be aligned on the virtual straight line L1 along the front-back direction D3. As a result, the positioning device 2 is capable of transmission/reception of the signals (GNSS signals and the like) by each of the antennas 21, 22. In particular, when the antennas 21, 22 are antennas for locating a position, the current position can be identified at the front and the rear of the machine body 10, respectively, and thus, the direction (current azimuth) of the machine body 10 can be also identified.

The support frame 3 is a member which is attached to one end portion in the front-back direction D3 of the machine body 10 and supports a spraying unit 41 of the spraying device 4, which will be described later. In this embodiment, the support frame 3 is attached to a rear end portion of the machine body 10. The support frame 3 has a gate shape similarly to the machine body 10 and is disposed at a position overlapping the machine body 10 on a rear view (viewed from behind). In other words, the support frame 3 has a vertical frame 3L (first vertical frame) and a vertical frame 3R (second vertical frame) disposed side by side in the left-right direction D2, and a horizontal frame 3C which connects the upper end portions of the vertical frame 3L and the vertical frame 3R to each other. As a result, the support frame 3 constitutes a gate shape surrounding three sides, that is, left, right, and upper sides of the space Sp1 by the vertical frame 3L, the vertical frame 3R, and the horizontal frame 3C.

Specifically, the support frame 3 has the vertical frame 3L and the vertical frame 3R disposed side by side in the left-right direction D2. The vertical frame 3L and the vertical frame 3R are opposed to each other in the left-right direction D2 in a state with an interval of a certain value or more. In this embodiment, as an example, the vertical frame 3L is located on the left side and the vertical frame 3R is located on the right side. Therefore, the vertical frame 3L is located on the rear of the first block 10L of the machine body 10, and the vertical frame 3R is located on the rear of the second block 10R of the machine body 10. And on the rear view (viewed from behind), the horizontal frame 3C has a length along the left-right direction D2, and the vertical frame 3L and the vertical frame 3R have a length along the up-down direction D1, respectively.

Here, the horizontal frame 3C connects the upper end portions of the vertical frame 3L and the vertical frame 3R to each other, in other words, the vertical frame 3L and the vertical frame 3R protrude downward from both end portions of the horizontal frame 3C (in the left-right direction D2), respectively. As described above, the support frame 3 includes the horizontal frame 3C having a length along the left-right direction D2 and the pair of vertical frames 3L, 3R having lengths along the up-down direction D1, respectively, and protruding downward from the both end portions of the horizontal frame 3C. As a result, the support frame 3 constitutes a gate shape open downward by the vertical frame 3L, the vertical frame 3R, and the horizontal frame 3C, in addition to the both sides in the front-back direction D3. And inside the support frame 3, the space Sp1 surrounded on three sides by the vertical frame 3L, the vertical frame 3R and the horizontal frame 3C and open to the front-back direction D3 is formed.

In short, as shown in FIG. 2, the support frame 3 forms the space Sp1, through which the crop V1 (work target, target for spraying) to be a target of the work (spraying work) by the spraying device 4 (work unit) is passed, between the pair of vertical frames 3L, 3R. Specifically, dimensions of each part in the support frame 3 are set so as to form the space Sp1 with a height and a width equal to or larger than a standard size of the crop V1 which is the target for spraying. Therefore, in the case of the crop V1 with the standard size, the support frame 3 can allow passage of the crop V1 through the space Sp1 in a state straddling the crop V1 with an interval at the predetermined value or more so that the crop V1 does not contact the support frame 3. While the crop V1 is passing through the space Sp1, the vertical frame 3L is located on the left of the crop V1, the vertical frame 3R is located on the right of the crop V1, and the horizontal frame 3C is located above the crop V1.

More precisely, in this embodiment, the support frame 3 is constituted substantially symmetrically in the left-right direction D2. The vertical frame 3L and the vertical frame 3R have a cylindrical shape with a circular cross section. In this embodiment, as an example, each of the vertical frame 3L and the vertical frame 3R is constituted by two cylindrical members provided side by side. The horizontal frame 3C has a square cylindrical shape with a rectangular cross section. Here, the vertical frame 3L and the vertical frame 3R are firmly fixed to the horizontal frame 3C, respectively, by appropriate fixing means such as connecting fittings, bracing fittings or welding. Therefore, the vertical frame 3L and the vertical frame 3R remain in a state orthogonal to the horizontal frame 3C, respectively. In other words, on the rear view, a corner part between the vertical frame 3L and the horizontal frame 3C and a corner part between the vertical frame 3R and the horizontal frame 3C are orthogonal, respectively.

By the way, in this embodiment, the support frame 3 is supported by the machine body 10 rotatably around the rotation axis Ax1 in a state where a relative positional relationship between the pair of vertical frames 3L, 3R and the horizontal frame 3C is maintained. The rotation axis Ax1 is an axis which passes through a fulcrum portion 31 provided on the horizontal frame 3C along the front-back direction D3. That is, the support frame 3 which supports the work unit (spraying unit 41) is supported by the machine body 10 rotatably around the rotation axis Ax1 along the front-back direction D3. Here, the term "rotation axis" referred to in this disclosure means a virtual axis (straight line) that serves as the center of a rotational motion of a rotating body. In other words, the rotation axis Ax1 is a virtual axis without substance. However, the rotation axis Ax1 may be a member with substance such as a shaft pin, for example. Details of the configuration for rotatably supporting the support frame 3 will be explained in "[3] Configuration around the Support Frame".

The spraying device 4 has the spraying unit 41 and the like. The spraying device 4 performs the spraying work in which a chemical solution as the sprayed material stored in the tank 64 is sprayed to the crop V1, which is the target for spraying. The spraying unit 41 is supported by the support frame 3 and is a part that performs spraying of the sprayed material. In this embodiment, as an example, the spraying unit 41 is a spray nozzle that actually serves as an outlet for the sprayed material (chemical solution). The spraying device 4 has a plurality of (12 in this embodiment as an example) spraying units 41 made of the spray nozzles. Details of the spraying device 4 will be explained in "[3] Configuration around the Support Frame".

The airflow generating unit 5 generates an airflow that carries the sprayed material (chemical solution) discharged from the spraying unit 41. The airflow generating unit 5 is supported by the support frame 3 together with the spraying unit 41. In other words, the spraying machine 1 according to this embodiment is an air-assist type spraying machine that sprays the sprayed material (chemical solution) by using the airflow generated by the airflow generating unit 5. As a result, the spraying machine 1 can efficiently spray the sprayed material (chemical solution) even to the target for spraying (crop V1) located at a position relatively far from the spraying unit 41. Details of the airflow generating unit 5 will be explained in "[3] Configuration around the Support Frame".

The user interface 61 is a device that performs at least either one of outputting information to the user and accepting operations. Here, the user interface 61 has a display unit 611 such as a liquid crystal display or an organic EL display that displays various types of information and an operation unit 612 that accepts an operation, such as a touch panel, a knob, or a pushbutton switch. An operator, who is an example of the user, can make various types of setting by operating the operation unit 612 in accordance with an operation screen displayed on the display unit 611. Specifically, the operator makes setting on operating conditions and the like of the spraying device 4 by operating the operation unit 612 of the user interface 61. An example of the operating conditions of the spraying device 4 includes a pressure (jet pressure), a flow rate and the like when the sprayed material is sprayed from the spraying unit 41.

The obstacle detecting device 62 includes a first sensor 621, a second sensor 622, a third sensor 623, and a fourth sensor 624. The first sensor 621 to the fourth sensor 624 are all disposed to be faced to the front of the machine body 10. The first sensor 621 is disposed on a front left end portion on the upper surface of the machine body 10, the second sensor 622 is disposed on the front right end portion on the upper surface of the machine body 10, the third sensor 623 is disposed on a front surface of the first block 10L, and the fourth sensor 624 is disposed on the front surface of the second block 10R, respectively. Moreover, the obstacle detecting device 62 further includes a fifth sensor 625 (see FIG. 5) and a sixth sensor 626 (see FIG. 6). The fifth sensor 625 and the sixth sensor 626 are both disposed to be faced to the rear of the machine body 10. The fifth sensor 625 is mounted on the vertical frame 3L, and the sixth sensor 626 is mounted on the vertical frame 3R.

Each of the first sensor 621 to the sixth sensor 626 includes a sensor such as an image sensor (camera), a sonar sensor, a radar or LiDAR (Light Detection and Ranging), for example, and detects a surrounding condition of the machine body 10. In this embodiment, as an example, each of the first sensor 621 to the sixth sensor 626 is a three-dimensional sensor which measures a distance to each distance-measuring point (measuring target) in a measurement range by using a TOF (Time Of Flight) method, which measures the distance to the distance-measuring point on the basis of round-trip time taken for light or sound to reach the distance-measuring point and return. The surrounding conditions of the machine body 10 include, for example, presence or absence of objects (obstacles and the like) in front of the machine body 10 in a traveling direction, a position of the object (distance and azimuth) and the like.

The obstacle detecting device 62 further includes a front contact sensor 627 and a rear contact sensor 628. The front contact sensor 627 is disposed in a left-right pair on the front side of the machine body 10, and the rear contact sensor 628 is disposed in a left-right pair on the rear side of the machine body 10. Each of the front contact sensor 627 and the rear contact sensor 628 detects an obstacle when it is contacted. Each of the sensors transmits a detection signal to a control device when an obstacle is detected.

The power source 63 is a drive source that supplies power at least to the traveling unit 11. The power source 63 has an engine, such as a diesel engine, for example. The power source 63 drives a hydraulic pump so as to have a hydraulic oil supplied to the motor 112 and the like of the traveling unit 11 from the hydraulic pump, whereby the traveling unit 11 and the like are driven.

The tank 64 stores the sprayed material such as chemical solutions and the like. The sprayed material stored in the tank 64 is supplied to the spraying device 4 and sprayed from the spraying unit 41 of the spraying device 4. The tank 64 can be replenished with a chemical solution, which is the sprayed material, from the outside. A capacity of the tank 64 is approximately 200L as an example.

The indicator 65 is disposed on the upper surface of the machine body 10. The indicator 65 is formed in a columnar shape having a length in the up-down direction D1 as an example. In the indicator 65, a lighting state is changed in accordance with the operating state of the spraying machine 1 (a traveling state and a progress state of the spraying work and the like). As a result, the operating state of the spraying machine 1 can be visually recognized even from the periphery of the spraying machine 1.

Moreover, the control device includes an automatic traveling control unit, an engine control unit, an HST (HydroStatic Transmission) control unit which executes control on a hydrostatic continuously variable transmission, a work device control unit and the like. The automatic traveling control unit causes the machine body 10 to automatically travel in accordance with the target path in the field F1 on the basis of positioning information and the like obtained from the positioning device 2. The engine control unit executes control on the engine. The HST control unit executes control on the hydrostatic continuously variable transmission. The work device control unit executes control on the work devices such as the spraying device 4 and the like. Each of the control units is constructed by an electronic control unit on which a microcontroller and the like are mounted and various types of information and control programs stored in a non-volatile memory in the microcontroller and the like.

The communication terminal is a communication interface that connects the spraying machine 1 to the communication network by wired or wireless connection and executes data communication in accordance with a predetermined communication protocol with external devices such as the operation terminal 201, the server 202 and the like via the communication network. Electronic devices such as the positioning device 2, the control device, the communication device and the like are connected to a battery and can operate even while the power source 63 is stopped.

### [3] Configuration around the Support Frame

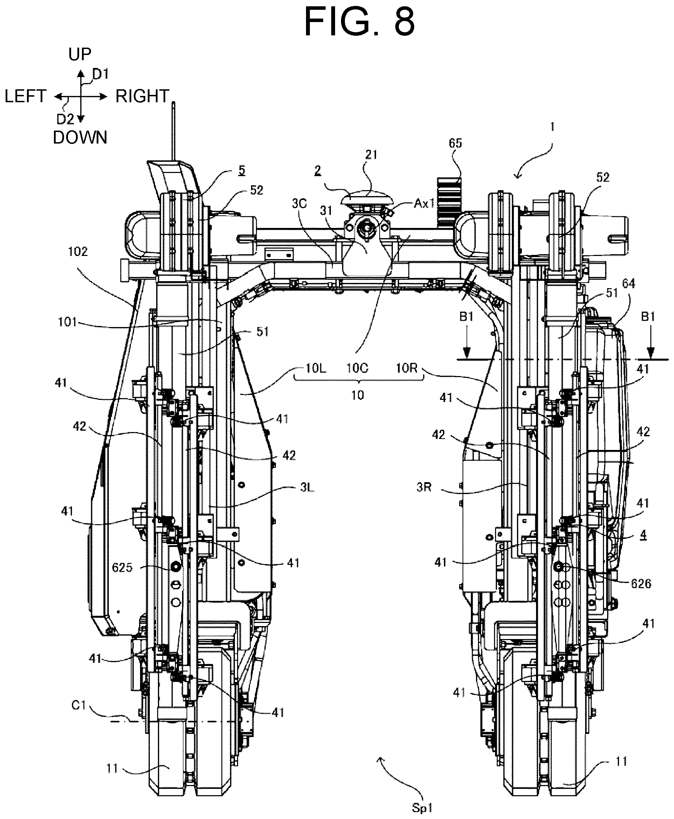

Next, the configuration of a rear section, which is a periphery around the support frame 3 of the spraying machine 1 according to this embodiment, will be described with reference to FIG. 8 to FIG. 11.

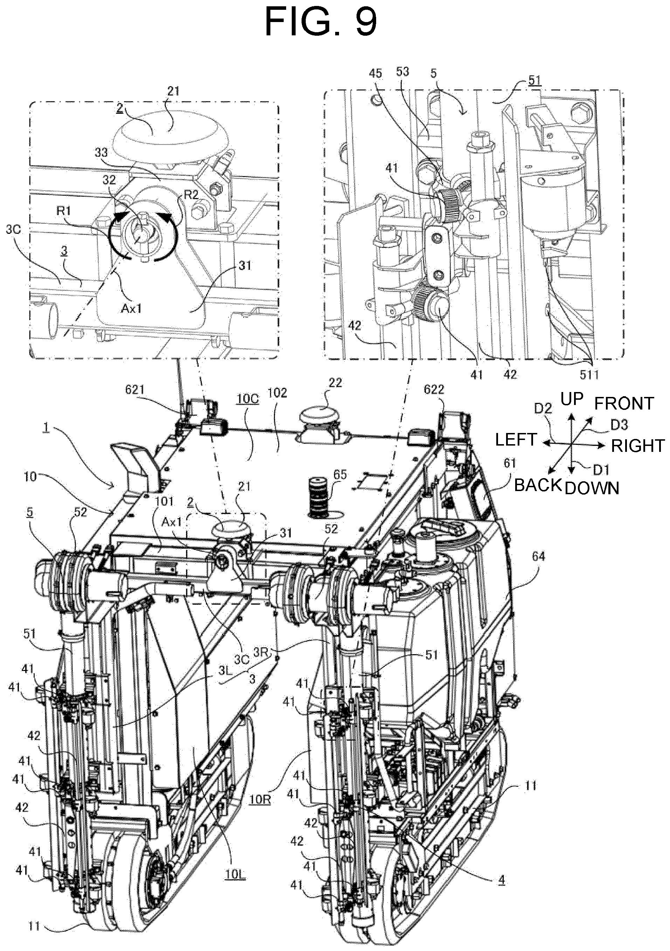

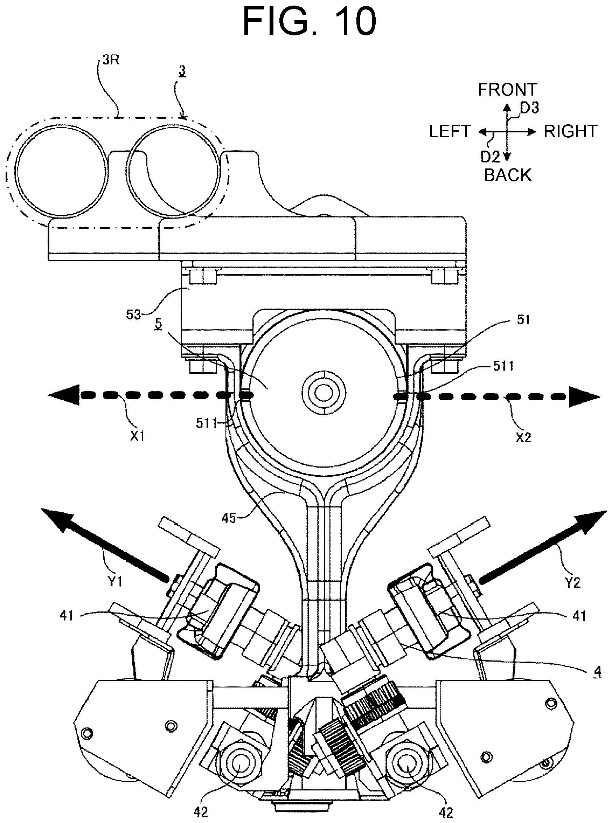

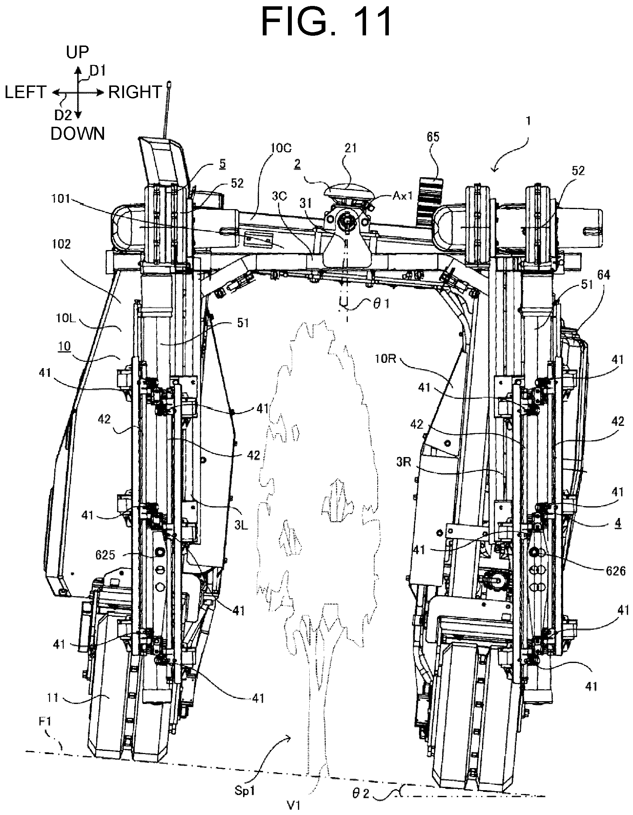

FIG. 8 is an appearance view of the rear surface of the spraying machine 1, viewed from the rear surface (back) side. FIG. 9 is a schematic diagram of the spraying machine 1 viewed from diagonally rear, with a partially enlarged view shown within the balloon. FIG. 10 is a cross-sectional view of the rear portion from the vertical frame 3R and corresponds to the B1-B1 line cross section in FIG. 8. FIG. 11 is an appearance view of the rear surface of the spraying machine 1 while traveling on the horizontally inclined slope, viewed from the rear surface side (back).

The spraying device 4 has a spraying pipe 42, a pump 43 (see FIG. 6), a valve 44 (see FIG. 6), spraying piping and the like in addition to the spraying unit 41 constituted by the spray nozzle.

The spraying unit 41 is an example of the work unit that performs the work (spraying work) and is supported by the support frame 3. Since the support frame 3 is supported by the machine body 10, the spraying unit 41 (work unit) is indirectly supported by the machine body 10. In this embodiment, the spraying unit 41 is attached to the spraying pipe 42. The spraying pipe 42 is connected to the pump 43 via the valve 44 by the spraying piping. The pump 43 press-feeds the sprayed material (chemical solution) stored in the tank 64 to the spraying pipe 42. The valve 44 is an electronically controlled valve unit, such as an electromagnetic valve, that changes a pressure (spray pressure), a spray pattern and the like when the spayed material is to be sprayed. As a result, the chemical solution in the tank 64 is supplied by the pump 43 to the spraying unit 41 via the valve 44 and the spraying pipe 42 and is sprayed from the spraying unit 41. Here, a chemical solution in a mist form is discharged (sprayed) from the spraying unit 41, which is the spray nozzle.

In more detail, as shown in FIGS. 8 and 9, the spraying pipe 42 is a pipe having a length in the up-down direction D1 and is attached two each to each of the vertical frame 3L and the vertical frame 3R of the support frame 3. In other words, in this embodiment, the spraying device 4 has four spraying pipes 42 in total. The two (a pair) spraying pipes 42 attached to each of the vertical frame 3L and the vertical frame 3R are disposed side by side in the left-right direction D2. Each of the spraying pipes 42 causes the chemical solution as the sprayed material poured from its upper end portion to be discharged from the three spraying units 41, while causing it to flow downward through the pipes. Each of the spraying pipes 42 has three spraying units 41 each attached thereto, so that the spraying device 4 has 12 spraying units 41 in total.

Each of the spraying units 41 is attached to the corresponding spraying pipe 42, capable of changing a position in the up-down direction D1. As a result, each of the spraying units 41 can change an interval from the adjacent spraying unit 41 and a height position with respect to the spraying pipe 42 in accordance with the target for spraying (crop V1). Moreover, each of the spraying units 41 is attached capable of changing a position in the up-down direction D1 and in the left-right direction D2 with respect to the machine body 10 and a direction (angle) in accordance with the target for spraying. However, in the spraying device 4, the number and the like of spraying units 41 provided in each of the spraying pipes 42 can be changed as appropriate in accordance with a type of the target for spraying (crop V1), the length of each of the spraying pipes 42 and the like.

The airflow generating unit 5 has a duct 51 and a blower 52. The duct 51 forms a flow path for air to flow along the up-down direction D1. The blower 52 causes the air to flow through the duct 51. The airflow generating unit 5 forms an airflow when the air is blown out of a blowout hole 511 (see FIG. 9) formed in the duct 51. In short, the airflow generating unit 5 blows out the air that the blower 52 sends into the duct 51 from the blowout hole 511 through the flow path in the duct 51, whereby the flow of the air (airflow) that flows outward from the blowout hole 511 is generated. According to this configuration, a stable airflow can be generated over a relatively wide area. Moreover, the airflow generating unit 5 can adjust an airflow rate of the airflow by controlling the blower 52. Then, the airflow generating unit 5 can adjust a transport distance of the sprayed material by adjusting the airflow rate, and the higher the airflow rate is, the farther the sprayed material can be transported. Thus, the spraying machine 1 according to this embodiment can adjust a spraying range of the sprayed material by the spraying device 4.

In more detail, the duct 51 is a pipe having a length in the up-down direction D1 and is attached one each to each of the vertical frame 3L and the vertical frame 3R of the support frame 3. In other words, in this embodiment, the airflow generating unit 5 has two units of the ducts 51 in total. Each of the ducts 51 has a plurality of blowout holes 511 aligned in a row along the up-down direction D1 on each of a left side surface and a right side surface of the duct 51 formed. Each of the ducts 51 causes the air which flows in from upper end portions thereof to blow out of each of the plurality of blowout holes 511 while causing it to flow downward through the pipe. The blower 52 is attached to the upper end portion of each of the ducts 51 and sends the air into the duct 51 through the upper end portion of the duct 51. In other words, in this embodiment, the airflow generating unit 5 has two units of the blowers 52 in total. Here, each blowout hole 511 penetrates the tube wall of the duct 51 in the left-right direction D2, and the air blown out of each blowout hole 511 forms air flows X1, X2 flowing to an outer side in the left-right direction D2, as shown in FIG. 10. As an example in this embodiment, the blower 52 is a blower that is electrically driven and blows air into the duct 51.

As shown in FIG. 10, the duct 51 of the airflow generating unit 5 is fixed by a mounting fixture 53 to the vertical frame 3R so as to be positioned at a rear of the vertical frame 3R. Furthermore, the two spraying pipes 42 of the spraying device 4 are fixed by a mounting fixture 45 to the duct 51 so as to be positioned at a rear of the duct 51. As a result, the two spraying pipes 42 are indirectly attached to the vertical frame 3R, and the spraying unit 41 attached to each of the spraying pipes 42 is indirectly supported by the vertical frame 3R. As an example in this embodiment, the mounting fixtures 45 are provided in plural (three, for example) in the up-down direction D1 for one piece of the duct 51 and fixes the spraying pipe 42 to the duct 51 at plural spots in the longitudinal direction (up-down direction D1). Furthermore, the mounting fixture 45 also serves as a fixture for the spraying unit 41, and the spraying unit 41 is firmly fixed by being attached to the mounting fixture 45.

Here, the duct 51, the two spraying pipes 42 attached thereto, and the six spraying units 41 in total attached to these two spraying pipes 42 are disposed symmetrically in the left-right direction D2. And, as shown in FIG. 10, in the two spraying pipes 42, the three spraying units 41 provided on the spraying pipe 42 on the left side discharge a sprayed material Y1 toward the front left, and the three spraying units 41 provided on the spraying pipe 42 on the right side discharge a sprayed material Y2 toward the front right. Therefore, the misty sprayed material Y1 discharged from the spraying unit 41 on the left side is transported leftward on an airflow X1 blown out of the duct 51 to the left, while the misty sprayed material Y2 discharged from the spraying unit 41 on the right side is transported rightward on an airflow X2 blown out of the duct 51 to the right.

Thus, in the plurality (12 pieces) of spraying units 41, the three spraying units 41 provided on the spraying pipe 42 on the leftmost end spray the chemical solution leftward to the crop V1 located on the outer left side of the machine body 10. In the plurality of spraying units 41, the three spraying units 41 provided on the spraying pipe 42 on the inner left side adjacent to the spraying pipe 42 on the leftmost end spray the chemical solution rightward to the crop V1 located in the space Sp1 inside the machine body 10. In the plurality of spraying units 41, the three spraying units 41 provided on the spraying pipe 42 on the rightmost end spray the chemical solution rightward to the crop V1 located on the outer right side of the machine body 10. In the plurality of spraying units 41, the three spraying units 41 provided on the spraying pipe 42 on the inner right side adjacent to the spraying pipe 42 on the rightmost end spray the chemical solution leftward to the crop V1 located in the space Sp1 inside the machine body 10.

With the above configuration, in the spraying device 4, the two spraying pipes 42 and the six spraying units 41 provided on the vertical frame 3L of the support frame 3 function as a spraying unit on the left side. Moreover, the two spraying pipes 42 and the six spraying units 41 provided on the vertical frame 3R of the support frame 3 function as the spraying unit on the right side. In addition, the pair of right and left spraying units are disposed on the rear of the machine body 10 with an interval (space Sp1) that allows passage of the crop V1 between the both in a state where spraying can be performed to the left-right direction D2.

Furthermore, in each of the spraying pipes 42 attached to the vertical frame 3L or the vertical frame 3R of the support frame 3, a plurality of (three, here) spraying units 41 are provided, which are disposed apart in the up-down direction D1. Therefore, the spraying device 4 can, by means of these plurality of spraying units 41, spray the sprayed material from a plurality of spots in the up-down direction D1 along the vertical frame 3L or the vertical frame 3R of the support frame 3. As a result, the spraying device 4 can uniformly spray the chemical solution, which is the sprayed material, from a lower part to an upper part of the crop V1, which is the target for spraying.

Moreover, in the spraying device 4, the plurality (12 units) of the spraying units 41 are divided into a plurality of systems, and each system is configured to be controllable. As an example, in the four spraying pipes 42, the six spraying units 41 provided on the inner two spraying pipes 42 in the left-right direction D2 are classified to a first system, the three spraying units 41 provided on the spraying pipe 42 on the leftmost end to a second system, and the three spraying units 41 provided on the spraying pipe 42 on the rightmost end to a third system. Therefore, spraying patterns by the spraying device 4 include a full spraying pattern in which the sprayed material (chemical solution) is sprayed from all the spraying units 41 and a limited spraying pattern in which a spraying direction is limited. The limited spraying pattern includes a first spraying pattern in which only the six spraying units 41 of the first system perform spraying, a second spraying pattern in which only the three spraying units 41 of the second system perform spraying, and a third spraying pattern in which only the three spraying units 41 of the third system perform spraying. Moreover, the limited spraying pattern includes a fourth spraying pattern in which only the nine spraying units 41 of the first system and the second system perform spraying, a fifth spraying pattern in which only the nine spraying units 41 of the first system and the third system perform spraying, and a sixth spraying pattern in which only the six spraying units 41 of the second system and the third system perform spraying.

The spraying device 4 is controlled by the control device (work device control unit), and the plurality of spraying patterns described above (the full spraying pattern and six patterns in total of the six limited spraying patterns) are switched as appropriate. Moreover, the spraying device 4 can change the spraying range of the sprayed material also by changing the pressure (spray pressure) at which the sprayed material is sprayed in each system. Furthermore, in this embodiment, the spraying range of the sprayed material can be adjusted also by adjusting the airflow rate of the airflow generating unit 5 and thus, a more diverse spraying range can be realized in accordance with the target for spraying (crop V1) or the sprayed material (chemical solution).

By the way, in this embodiment, the support frame 3 is supported by the machine body 10 rotatably around the rotation axis Ax1 in the state where the relative positional relationship between the pair of vertical frames 3L, 3R and the horizontal frame 3C is maintained as described above. In other words, the support frame 3 supporting the spraying unit 41 is not fixed relatively to the machine body 10, but is rather configured to be rotatable around the rotation axis Ax1. As the support frame 3 rotates, the plurality of spraying units 41 supported by the support frame 3 also rotate around the rotation axis Ax1.

Specifically, as shown in FIG. 9, at a center part in the longitudinal direction (left-right direction D3) of the horizontal frame 3C, the fulcrum portion 31 is provided. The fulcrum portion 31 is a member that serves as a fulcrum at rotation of the support frame 3 and protrudes upward from the upper surface of the horizontal frame 3C and is connected to the horizontal frame 3C by appropriate connecting means such as welding. On the upper end portion of the fulcrum portion 31, a shaft pin 32 is provided along the front-back direction D2 so as to penetrate the fulcrum portion 31. The shaft pin 32 is a columnar shaft member having a length along the front-back direction D2. In addition, a bearing stand 33 supporting the shaft pin 32 is located in the center part in the left-right direction of the rear end portion of the machine body 10. The bearing stand 33 protrudes upward from the upper surface of the frame 101 in the machine body 10 and is connected to the frame 101 by appropriate connecting means such as welding or the like. The shaft pin 32 is supported rotatably with respect to at least either one of the fulcrum portion 31 and the bearing stand 33 through a bearing member such as a bearing or the like.

According to the above configuration, the support frame 3 is supported rotatably with the shaft pin 32 as a fulcrum with respect to the machine body 10. On the other hand, movement of the support frame 3 other than the rotation with the shaft pin 32 as the fulcrum with respect to the machine body 10, such as parallel movement in the front-back direction D1, is prohibited. In other words, a center axis of the shaft pin 32 functions as the rotation axis Ax1, and the support frame 3 is supported by the machine body 10 rotatably around the rotation axis Ax1.

Here, the spraying machine 1 further includes a regulating member (not shown) that limits a rotation range (movable range) of the support frame 3 relative to the machine body 10. The regulating member may be provided on any one of the machine body 10, the support frame 3, the fulcrum portion 31, and the bearing stand 33. With the regulating member as above, the rotation range of the support frame 3 is limited to a range by a predetermined angle each in a first direction R1 (see FIG. 9) and a second direction R2 (see FIG. 9) with respect to a neutral position, where the horizontal frame 3C is parallel to the upper surface of the machine body 10. The first direction R1 is clockwise when viewed from the rear, while the second direction R2 is counterclockwise when viewed from the rear. The predetermined angle referred to here can be set as appropriate to 5, 10, 15, 20 or 30 degrees, for example. Furthermore, a mechanism that can adjust the predetermined angle may be provided.

Moreover, the spraying machine 1 according to this embodiment does not include an actuator or the like that actively rotates the support frame 3. Therefore, the support frame 3 rotates only after an external force acts on the support frame 3. For example, when the machine body 10 travels on a horizontally inclined slope, the support frame 3 rotates by its own weight of the support frame 3, that is, the gravity acting on the support frame 3. Here, a stopper that prohibits rotation of the support frame 3 with respect to the machine body 10 may be mounted on the spraying machine 1, and by mounting the stopper, vibration of the support frame 3 during transportation of the spraying machine 1 is prevented. Moreover, the spraying machine 1 may also include a damper that exerts a damping force on the support frame 3, so that the vibration of the support frame 3 can be easily converged while the machine body 10 travels, for example.

Here, the fulcrum portion 31 is disposed at a position equidistant from the pair of vertical frames 3L, 3R of the horizontal frame 3C. The term "equidistant" here refers to a case where the distances from the pair of vertical frames 3L, 3R are exactly the same, as well as a case where a difference between the distances from the pair of vertical frames 3L, 3R is within an error range of a few centimeters (less than 10 cm, for example). Therefore, the rotation axis Ax1 passing through the fulcrum portion 31 is located at a center (or a substantial center) in the longitudinal direction (left-right direction D2) of the horizontal frame 3C. As a result, an amount of rise (or fall) of the vertical frame 3L can be matched with the amount of fall (or rise) of the vertical frame 3R during the rotation of the support frame 3, and the support frame 3 can be rotated in a balanced manner. In particular, if the support frame 3 and the members supported by the support frame 3 (the spraying unit 41, the spraying pipe 42, the airflow generating unit 5 and the like) have a symmetrical weight balance in the left-right direction D2, the support frame 3 is maintained at the neutral position as long as the machine body 10 is kept horizontal.

According to the rotatable support frame 3 as described above, as shown in FIG. 11, for example, when the machine body 10 is traveling on the horizontally inclined slope, the support frame 3 rotates. In other words, if the road surface of the field F1 is horizontally inclined such that the right side of the left-right direction D2 is lower, the machine body 10 is inclined to the right side while the support frame 3 maintains an attitude in which the horizontal frame 3C is horizontal by its own weight. Therefore, the support frame 3 rotates in the second direction R2 (counterclockwise) around the rotation axis Ax1 with respect to the machine body 10. Here, a rotation angle θ1 (amount of rotation) of the support frame 3 corresponds to an inclination angle of the machine body 10, that is, an inclination angle θ2 around the rotation axis Ax1 with respect to the horizontal plane of the field F1. For example, if the inclination angle θ2 of the field F1 is 10 degrees, the support frame 3 rotates for a rotation angle of θ1, which is 10 degrees. FIG. 11 exemplifies a case where the rotation angle θ1 and the inclination angle θ2 are both 5 degrees.

In the spraying machine 1 according to this embodiment, even on a slope as exemplified in FIG. 11, rotation of the support frame 3 makes it difficult to cause unevenness in the sprayed amount (uneven spraying) of the sprayed material (chemical solution) by the spraying unit 41. In short, if the support frame 3 is fixedly supported by the machine body 10, the machine body 10 can be inclined while traveling on a horizontally inclined slope. And in this case, in the crop V1 (target for spraying) that extends vertically straight from the ground (field F1), the distances from the spraying unit 41 are different between the upper part and the lower part thereof, which may cause unevenness in the sprayed amount of the sprayed material. In contrast, in the spraying machine 1 according to this embodiment, by means of the rotation of the support frame 3, the same attitude as that while traveling on the horizontal plane can be maintained for the support frame 3 and the spraying unit 41 and the like which are supported by the support frame 3. Therefore, even in case of the crop V1 (target for spraying) extending vertically straight from the ground (field F1), there is an advantage that the distances from the spraying unit 41 between the upper part and the lower part thereof become less likely to vary, making it easier to suppress occurrence of unevenness in the sprayed amount of the sprayed material.

Furthermore, in this embodiment, the airflow generating unit 5 is also supported by the support frame 3, so the direction of the airflow generated by the airflow generating unit 5 can be also kept in the horizontal direction regardless of the inclination of the machine body 10 during traveling on the horizontally inclined slope. As a result, the sprayed material can be appropriately transported by air assist.

Moreover, in this embodiment, as shown in FIG. 8, the spraying unit 41 is disposed at a position higher than a center C1 of the traveling unit 11 in the up-down direction D1. In other words, the traveling unit 11 including the crawler 111 has a certain degree of height in the up-down direction D1, and assuming that the center position in the up-down direction is the center C1, the spraying unit 41 is located above this center C1. In this embodiment, since a plurality (12 units) of the spraying units 41 are provided, even the spraying unit 41 at the lowest position is located at a position higher than (above) the center C1 of the traveling unit 11. According to this configuration, since the spraying unit 41 can ensure a certain degree of height from the field F1, it can easily spray the sprayed material within an appropriate range from the spraying unit 41. Furthermore, when the support frame 3 rotates with respect to the machine body 10, the spraying unit 41 is less likely to come into contact with the field F1.

By the way, in this embodiment, the antenna 21 (first antenna) of the positioning device 2 is disposed above the rotation axis Ax1. Specifically, the antenna 21 is disposed on the bearing stand 33 that supports the shaft pin 32, as shown in FIG. 9. Since the antenna 21 receives the signal (GNSS signal and the like) transmitted from the satellite 204, it can receive the signal without being affected by obstacles by being disposed at this position. Moreover, if it is on the rotation axis Ax1, even in the case where the support frame 3 is shaken due to vibration, for example, a position change of the antenna 21 can be kept small, and an influence on reception (or transmission) of the signal at the antenna 21 can be minimized. In particular, in this embodiment, since the antenna 21 is disposed on the bearing stand 33 which supports the shaft pin 32, which is a rotation center of the support frame 3, even if the support frame 3 rotates, the antenna 21 does not rotate, and the direction of the antenna 21 remains constant and thus, performances of signal reception (or transmission) at the antenna 21 can be stable easily.

Furthermore, in this embodiment, the rotation axis Ax1 is located at the center in the left-right direction D3 of the support frame 3. More precisely, the rotation axis Ax1 passing through the fulcrum portion 31 is located on the center (or substantial center) in the longitudinal direction (left-right direction D2) of the horizontal frame 3C. Therefore, the antenna 21 is disposed at the position to be the reference of the machine body 10 and can exert performances as an antenna easily. In particular, in a case where the antenna 21 is an antenna for locating a position, the antenna 21 is located at the center on a plan view and thus, by identifying the position of the antenna 21, the center position in the left-right direction D2 of the machine body 10 is identified, and processing for identifying the position of the machine body 10 is facilitated. In addition, when the machine body 10 has a gate shape, as in this embodiment, the antenna 21 is located immediately above the target for spraying (crop V1) to be passed through the space Sp1 inside the machine body 10 and thus, the above disposition is effective also in view of identifying the position of the target for spraying.

In addition, in this embodiment, as shown in FIG. 7, the antenna 22 (second antenna), which is different from the antenna 21 (first antenna) is also disposed on the virtual straight line L1 extended from the rotation axis Ax1. Therefore, the two antennas 21, 22 are both located on the center line (virtual straight line L1) in the left-right direction D2 of the machine body 10, and the performance as an antenna can be sufficiently exerted easily. In particular, in the case where the antennas 21, 22 are antennas for locating a position, the current position can be identified accurately at the front and rear of the machine body 10, respectively, and thus, the direction (current azimuth) of the machine body 10 can be also identified with accuracy.

### [4] Disposition of Power Source and the like

Next, disposition of the power source 63 and the like in the machine body 10 will be described in more detail with reference to FIGS. 5, 6 and 7.

The components of the spraying machine 1, such as the power source 63, the tank 64 and the like, are disposed in the distributed manner in the first block 10L and the second block 10R in the machine body 10. Here, the power source 63 for driving the machine body 10 is disposed in the first block 10L, and the user interface 61, which performs at least either one of outputting information to the user and accepting operations, is disposed in the second block 10R. In this embodiment, the power source 63 is an engine that supplies power at least to the traveling unit 11 by driving the hydraulic pump. Therefore, the hydraulic pump, the fuel tank that supplies fuel to the power source 63 and the like are also disposed in the first block 10L similarly to the power source 63.

As described above, in this embodiment, in the machine body 10 divided into the first block 10L and the second block 10R aligned in the left-right direction D2, the power source 63 is disposed biasedly in one of them, that is, the first block 10L. Therefore, on the first block 10L side where the power source 63 is disposed, influences of a heat, vibration, an electromagnetic noise, sound and the like generated in the power source 63 become larger. In other words, the power source 63, such as an engine, a motor or the like, can be a heat source that generates a heat, a vibration source that generates vibration, a noise source that generates an electromagnetic noise, a noise source that generates noise or the like when driven. For example, assuming that the user interface 61 is disposed on the same first block 10L side as the power source 63, a heat, sound or the like generated in the power source 63 may interfere with the work by the user using the user interface 61. Moreover, electronic devices such as the user interface 61 are susceptible to damage by a heat, vibration, an electromagnetic noise or the like generated in the power source 63.

In the spraying machine 1 according to this embodiment, at least the user interface 61 is provided not on the first block 10L side where the power source 63 is disposed but on the second block 10R. Therefore, the heat, vibration, electromagnetic noise, sound or the like generated in the power source 63 no longer affects easily the user using the user interface 61 or the user interface 61 itself. In the end, it is possible to realize the spraying machine 1 (work machine) in which a heat, vibration, an electromagnetic noise, sound or the like generated in the power source 63 is less likely to be a problem.

In particular, in this embodiment, between the first block 10L and the second block 10R, the space Sp1 through which the crop V1 (work object) passes is formed. Therefore, according to the disposition of the power source 63 and the user interface 61 described above, the space Sp1 is interposed between the power source 63 and the user interface 61, and the influences of the heat, vibration, electromagnetic noise, sound or the like generated in the power source 63 on the user interface 61 can be significantly reduced.

Specifically, the power source 63 is accommodated in a front half of the first block 10L, as shown in FIG. 5. The power source 63 is basically covered by the cover 102, and the influence of the heat or the like generated in the power source 63 on the surroundings of the machine body 10 is also suppressed. On the other hand, the user interface 61 is disposed in a form exposed to the right side with respect to the second block 10R, as shown in FIG. 6. Therefore, the user who uses the user interface 61 uses the user interface 61 basically in a state standing on the right side of the machine body 10. As a result, the influence of the heat, sound and the like generated in the power source 63, for example, on the user using the user interface 61 is significantly suppressed.

Moreover, in this embodiment, the work unit includes the spraying unit 41 that performs spraying of the sprayed material (chemical solution) as a work, and in the second block 10R, the tank 64 which stores the sprayed material is disposed. In other words, the tank 64, which is a heavy object along with the power source 63, is provided not on the first block 10L side where the power source 63 is disposed but on the second block 10R. Therefore, a weight can be easily balanced between the first block 10L and the second block 10R of the machine body 10, which leads to stabilization of the attitude of the machine body 10 and improvement of traveling performance (including turning performance). The tank 64 is fixed to the frame 101 of the second block 10R. A part of the second block 10R corresponding to the tank 64 does not have the cover 102 provided, and at least a right side surface and an upper surface of the tank 64 are exposed.

In particular, in this embodiment, when a remaining amount of the sprayed material in the tank 64 is half (one-half) of a capacity of the tank 64, the weight is balanced between the first block 10L and the second block 10R, whereby the weight balance when the spraying machine 1 is actually in use is made suitable. In other words, while the remaining amount of the sprayed material can vary between 100% and 0% of the capacity of the tank 64, the weight is balanced between the first block 10L and the second block 10R at 50%, which is a median value. Therefore, during actual use (operation) of the spraying machine 1, the remaining amount of the sprayed material is varied around a state where the weight is balanced between the first block 10L and the second block 10R (remaining amount at 50%), and the weight can be easily balanced between the first block 10L and the second block 10R. In addition, even if the remaining amount of the sprayed material is more or less than 50%, a difference in the weights between the first block 10L and the second block 10R can be suppressed to the weight equal to or less of the sprayed material in the capacity of the tank 64 and thus, extreme weight imbalance between the first block 10L and the second block 10R can be avoided.

More precisely, as shown in FIG. 6, the tank 64 occupies most of the second block 10R on a side view (viewed from the right), and as an example, it has a hexagonal shape based on a rectangular shape, which is long in the front-back direction D3, with each corner on a lower part on both sides in the front-back direction D2 cut out in a triangular shape. The shape of the tank 64 as above ensures a space on each of the front and rear sides of the lower part of the tank 64. In the space below the tank 64 as above, the pump 43 and the like of the spraying device 4 are disposed in the space on the front side, while the valve 44 and the like are disposed in the space on the rear side. The valves 44 are provided for each system of the plurality of spraying units 41, and in this embodiment, three pieces of the valves 44 corresponding to the three systems (first system, second system, and third system) are provided.

In this embodiment, the user interface 61 includes the operation unit 612 that accepts operations for adjustments related to the work (spraying work) and the display unit 611 that displays information related to the operation. In more detail, the display unit 611 constituted by a liquid crystal display, for example, is disposed close to the front end of the second block 10R, and below the display unit 611, a knob, a pushbutton switch or the like is disposed as the operation unit 612. As a result, the user can operate the operation unit 612 while viewing a setting screen or the like displayed on the display unit 611.

Moreover, above the pump 43, a control box 613 that controls a motor of the pump 43 is disposed, and the control box 613 also has a knob, a push button or the like disposed as the operation unit 612. In addition, above the valve 44, three knobs for controlling the valve 44 are disposed as the operation units 612, corresponding to the three valves. On the user's side, by operating the operation unit 612 of the control box 613, the operation of the pump 43 can be controlled, and the flow rate of the spray material (chemical solution) can be adjusted, and by operating the operation unit 612 above the valve 44, opening/closing of the valve 44 or the pressure (spray pressure) of the sprayed material can be adjusted. When these operation units 612 are operated, too, by having a measured value of a flowmeter, a measured value of a pressure gauge or the like displayed on the display unit 611, and by performing the operation for adjustment related to the work, while viewing the display on the display unit 611, for example, the operation is facilitated. However, in the case of the operation unit 612 and the like above the valve 44, since they are located relatively far from the display unit 611, it is preferable that two users, for example, work together to make the adjustment. In this case, it is preferable that one user checks the display on the display unit 611, while the other user operates the operation unit 612 to improve adjustment workability.

### [5] Variation

Variations of Embodiment 1 will be described below. The variations described below can be applied in combination as appropriate.

The spraying machine 1 is not limited to orchards such as vineyards or apple orchards, but may also be used for works in other fields F1 or work target areas other than the field F1. Furthermore, the sprayed material sprayed by the spraying machine 1 is not limited to chemical solutions, but can also be water, fertilizer, disinfectant solution or other liquids, or powders or the like, for example. Similarly, the targets for spraying to which the sprayed material is sprayed are not limited to grape trees, but may also be other crops or objects other than crops (including inorganic objects). Moreover, the spraying machine 1 is not limited to an unmanned machine that operates by an automatic operation, but the spraying machine 1 can also be configured to operate by an operation (including remote control) of a human (operator) or can be a passenger type (manned machine) on which an operator can board, for example. In this case, too, the antenna 21 or the like is provided on the spraying machine 1 in order to determine the current position of the spraying machine 1.

Moreover, the support frame 3 only needs to be attached to one end portion in the front-back direction D3 of the machine body 10 and may be attached on the front of the machine body 10. In this case, the work unit (spraying unit 41) supported by the support frame 3 is also disposed on the front of the machine body 10, not on the rear thereof.

Moreover, the machine body 10 only needs to have the first block 10L and the second block 10R aligned in the left-right direction D2, and left and right of the first block 10L and the second block 10R may be reversed. In other words, it may be so configured that the first block 10L on which the power source 63 and the like are provided is located on the right side, while the second block 10R on which the user interface 61 and the like are provided is located on the left side.

Moreover, the traveling unit 11 is not limited to a crawler-type traveling device, but may have one or a plurality of wheels and be configured to travel by rotation of the wheels, for example. Furthermore, the traveling unit 11 is not limited to a configuration driven by a hydraulic motor, but may also be configured to be driven by an electric motor, for example.

Moreover, the spraying machine 1 is not limited to the air-assist type spraying machine as in Embodiment 1, but may also be of an electrostatic spraying type or a type combining the air-assist type and the electrostatic spraying type and the like. In the case of the electrostatic spraying type spraying machine 1, the airflow generating unit 5 can be omitted.

Moreover, the power source 63 is not limited to an engine, but may have a motor (electric motor), for example, or may be a hybrid power source that includes an engine and a motor.

In addition, the spraying machine 1 may be configured in such a mode that the machine body 10 does not have a gate-shape, but the entire machine body 10 travels between a pair of adjacent crop rows Vr1 (work path). In this case, the spraying machine 1 travels on each work path without straddling the crop row Vr1. In this case, the spraying device 4 performs the spraying work by switching among a spraying pattern in which the chemical solution is sprayed to both in the left-right directions D2, a spraying pattern in which the chemical solution is sprayed only to the left, and a spraying pattern in which the chemical solution is sprayed only to the right.

In addition, the antennas 21, 22 are not limited to antennas for locating a position, but may be antennas for wireless communication, for example. Moreover, the antennas 21 and 22 are not limited to those for reception, but may be the one for transmission or for reception and transmission.

Moreover, the user interface 61 may have means of presenting information to the user by sound output or the like in addition to or instead of the display unit 611, for example. Furthermore, at least one of the adjustment items (flow rate or pressure and the like) may be automatically adjusted by the control device using the operation unit 612 of the user interface 61. In this case, the operation unit 612 can be omitted as appropriate, and the user interface 61 may only display the adjustment results on the display unit 611.

In addition, in Embodiment 1, the spraying machine 1 is described as an example of the work machine, but the work machine is not limited to the spraying machine 1. For example, the work machine may be a plucking machine, in which case a plucking unit that performs a plucking work is an example of the work unit and is supported by the support frame 3.

### Embodiment 2

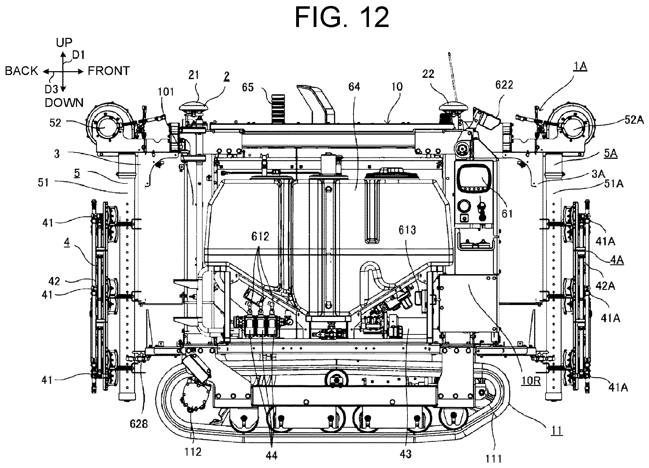

As shown in FIG. 12, a spraying machine 1A according to this embodiment is different from the spraying machine 1 according to Embodiment 1 in points that it further includes spraying units 41A (second spraying units) disposed to be aligned with respect to the spraying units 41 (first spraying units) in the front-back direction D3 and performing spraying of the sprayed material (chemical solution). Hereinafter, the same configurations as those in Embodiment 1 will be given common signs, and explanation will be omitted as appropriate.

In this embodiment, the spraying machine 1A includes a support frame 3A (second support frame) provided on the front of the machine body 10 in addition to the support frame 3 (first support frame) provided on the rear of the machine body 10. A spraying device 4A and an airflow generating unit 5A are supported by the support frame 3A. The spraying device 4A (second spraying device) is configured symmetrically with the spraying device 4 (first spraying device) in the front-back direction D3, and similarly to the spraying device 4, it has the spraying unit 41A and a spraying pipe 42A. The airflow generating unit 5A (second airflow generating unit) is configured symmetrically with the airflow generating unit 5 (first airflow generating unit) in the front-back direction D3, and similarly to the airflow generating unit 5, it has a duct 51A and a blower 52A.

In short, the spraying machine 1A includes the second work units (spraying units 41A) disposed to be aligned with respect to the first work units 41 (first spraying units), which is the work unit, in the front-back direction D3 and performing the work (spraying work). As a result, the spraying machine 1A can perform the work (spraying work) by each of the two spraying units 41, 41A aligned in the front-back direction D3, whereby work efficiency can be improved as compared with the case where the work is performed only by either one of the work units.

Moreover, the support frame 3A is supported rotatably around the rotation axis Ax1 with respect to the machine body 10 similarly to the support frame 3. Therefore, in the spraying device 4A and the airflow generating unit 5A attached to the support frame 3A, too, unevenness in the sprayed amount of the sprayed material (chemical solution) by the spraying unit 41A is unlikely to occur by rotation of the support frame 3A while the machine body 10 is traveling on the horizontally inclined slope.

As a variation of Embodiment 2, at least either one of the support frames 3, 3A aligned in the front-back direction D3 may be configured non-rotatable with respect to the machine body 10. For example, the support frame 3 is supported rotatably with respect to the machine body 10, and the support frame 3A is fixedly supported.

As another variation of Embodiment 2, the spraying unit (spraying device) may be provided in three stages or more in the front-back direction D3. For example, the spraying machine 1A may further include a spraying unit (third spraying unit) located between the pair of spraying units 41, 41A in the front-back direction D3.

The configuration of Embodiment 2 can be employed in combination of various configurations (including the variations) described in Embodiment 1 as appropriate.

### Embodiment 3

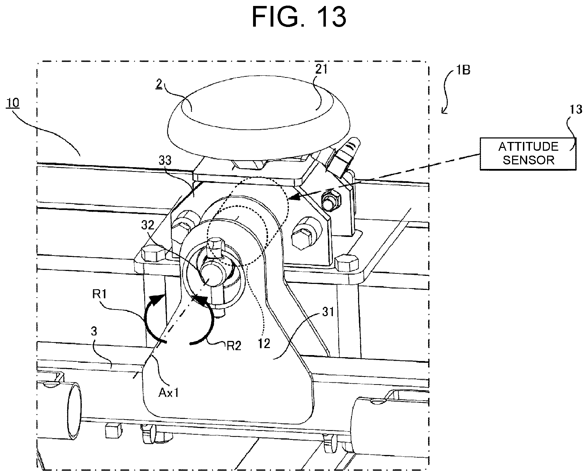

A spraying machine 1B according to this embodiment is different from the spraying machine 1 according to Embodiment 1 in a point that a rotating/driving device 12 is provided as shown in FIG. 13. Hereinafter, the same configurations as those in Embodiment 1 will be given common signs, and explanation will be omitted as appropriate.

The rotating/driving device 12 generates a torque to rotate the support frame 3 around the rotation axis Ax1 with respect to the machine body 10. In other words, the rotating/driving device 12 is an actuator that actively rotates the support frame 3. Specifically, the rotating/driving device 12 is a motor, a speed reduction gear or the like provided on the bearing stand 33 and causes a torque to act on the shaft pin 32. The rotating/driving device 12 rotates the support frame 3 via the shaft pin 32 and stops the support frame 3 at an optional rotation angle. As a result, the support frame 3 can be controlled to a targeted rotation angle more easily as compared with a configuration in which the support frame 3 rotates passively in response to an external force.

In addition, in this embodiment, the rotating/driving device 12 rotates the support frame 3 in accordance with the attitude of the machine body 10. In other words, as shown in FIG. 13, the spraying machine 1B includes an attitude sensor 13 provided on the machine body 10 and monitors the attitude of the machine body 10 by the attitude sensor 13. The attitude sensor 13 is a gyro sensor or the like, for example, and detects the inclination angle or the like of the machine body 10 while traveling on the horizontally inclined slope as the attitude of the machine body 10. The rotating/driving device 12 rotates and drives the support frame 3 on the basis of detection results of the attitude sensor 13. As an example, in a case where the inclination angle of the field F1 is 5 degrees and the machine body 10 is inclined by 5 degrees to the right (see FIG. 11), the rotating/driving device 12 rotates the support frame 3 in the second direction R2 only by 5 degrees. As a result, the support frame 3 can be rotated to an appropriate rotation angle according to the attitude of the machine body 10.

As a variation of Embodiment 3, the rotating/driving device 12 may rotate and drive the support frame 3 regardless of the attitude of the machine body 10. In this case, the attitude sensor 13 can be omitted as appropriate.

The configuration of Embodiment 3 can be employed in combination of various configurations (including the variations) described in Embodiment 1 or Embodiment 2 as appropriate.

### REFERENCE SIGNS LIST

1, 1A, 1B Spraying machine (work machine)
3, 3A Support frame
3L, 3R Vertical frame
10 Machine body
21 (First) antenna
22 (Second) antenna
41 (First) spraying unit (first work unit)
41A (Second) spraying unit (second work unit)
Ax1 Rotation axis
D1 Up-down direction
D2 Left-right direction
D3 Front-back direction
L1 Virtual straight line
Sp1 Space
V1 Crop (work target)

## Claims

1. A work machine comprising:
a machine body;
a work unit for performing a work;
a support frame supported by the machine body rotatably around a rotation axis along a front-back direction and supporting the work unit; and
an antenna disposed above the rotation axis.

2. The work machine according to claim 1, wherein
the antenna includes an antenna for locating a position of the machine body.

3. The work machine according to claim 1 or 2, further comprising:
a second antenna disposed so as to be aligned in the front-back direction with respect to a first antenna, which is the antenna; and
the second antenna is located on a virtual straight line extended from the rotation axis on a plan view.

4. The work machine according to any one of claims 1 to 3, further comprising:
a second work unit disposed so as to be aligned in the front-back direction with respect to a first work unit, which is the work unit, and performing the work.

5. The work machine according to any one of claims 1 to 4, wherein
the support frame includes a pair of vertical frames each having a length along an up-down direction and forms a space through which a work target which is a target of the work by the work unit is passed between the pair of vertical frames.

6. The work machine according to any one of claims 1 to 5, wherein
the rotation axis is located at a center part in a left-right direction of the support frame.
